**Europäisches Patentamt**

**European Patent Office**

**Office européen des brevets**

(19)

(11) Veröffentlichungsnummer : **0 184 145 B2**

(12)

# NEUE EUROPÄISCHE PATENTSCHRIFT

(45) Veröffentlichungstag der neuen Patentschrift :
**14.12.94 Patentblatt 94/50**

(51) Int. Cl.$^5$ : **G01B 11/02, B65H 9/20**

(21) Anmeldenummer : **85115120.9**

(22) Anmeldetag : **28.11.85**

(54) **Messkopf.**

(30) Priorität : **04.12.84 DE 3444172**
**20.12.84 DE 3446531**

(43) Veröffentlichungstag der Anmeldung :
**11.06.86 Patentblatt 86/24**

(45) Bekanntmachung des Hinweises auf die
Patenterteilung :
**31.01.90 Patentblatt 90/05**

(45) Bekanntmachung des Hinweises auf die
Entscheidung über den Einspruch :
**14.12.94 Patentblatt 94/50**

(84) Benannte Vertragsstaaten :
**AT BE CH DE FR GB IT LI LU NL SE**

(56) Entgegenhaltungen :
**DE-A- 2 046 602**
**DE-A- 2 202 087**
**DE-A- 2 460 747**
**DE-A- 2 659 469**

(56) Entgegenhaltungen :
**DE-A- 2 913 410**
**DE-A- 3 308 316**
**Proceedings of the IEEE, vol. 63, No. 1, January 1975, pg 38-67. David F. Barbe: Imaging Devices Using the Charge-Coupled Concept.**
**"CCD Analog VLSI-Technologie der 80er Jahre", herausgegeben von Fa. Elektronic 2000 Vertriebs GmbH, Neumarkter Str. 75, 8000 München**
**"Optische Datenerfassung mit CCD-Kameras", Elektronik, Heft 25, 1982, Seite 89-92**
**Diplomarbeit von Kurt Hiller,**
**"Opto-elektronische Kontrolle des Papierbogens beim Druckmaschinendurchlauf", 1980, Fachhochschule für Technik, Esslingen**

(73) Patentinhaber : **Koenig & Bauer Aktiengesellschaft**
**Friedrich-Koenig-Strasse 4**
**D-97080 Würzburg (DE)**

(72) Erfinder : **Bolza-Schünemann, Claus August**
**Pilgerstrasse 63**
**CH-5405 Dättwil (CH)**

EP 0 184 145 B2

## Beschreibung

Die Erfindung betrifft einen Messkopf zur Bestimmung einer Lage eines Körpers, insbesondere Papier, vorzugsweise in einer Bogenrotationsdruckmaschine gemäss dem Oberbegriff des Anspruchs 1.

Derartige Messköpfe sind z.B. duch die DE-AS 2 046 602 bekanntgeworden. Mit dem beschriebenen Messkopf lassen sich bei den heute geforderten Maschinengeschwindigkeiten (15-20000 Bogen/Stunde) die erforderliche Messgenauigkeit und Messgeschwindigkeit nicht erreichen.

Aus der DE-PS 3 032 950 ist eine Einrichtung zur messtechnischen Auswertung von Videokamerabildern für eine Bahnkantenregelung bekanntgeworden. Eine derartige Einrichtung weist eine zu grobe Auflösung auf und ist zu träge, so dass sie zur Lösung der gestellten Aufgabe nicht verwendet werden kann.

Aus der DE-OS 2 202 087 ist eine lichtelektrische Messeinrichtung bekannt, bei der in geringem Abstand hintereinander lichtelektrische Empfänger angeordnet sind, denen ein Lichtgeber zugeordnet ist. Beim Einlauf eines Bogens in die Strahlengänge zwischen Lichtgeber und den lichtelektr. Empfängern fallen zeitlich aufeinanderfolgende Signale an. Sie werden mittels Analog-Digital-Convertern in digitale Signale umgewandelt. Diese Signale werden über ein Oderglied einer Taktstufe zugeführt, die die Signale beim Einlauf des Bogens durchläßt an eine nachgeschaltete Stufe. Die Weiterleitung der Signale wird unterbrochen, sobald der Bogen in Reihe ist. Die durchgelassenen Signale werden einem Zähler zugeführt und stehen dort zur Abfrage bereit. Jedoch können Messgeschwindigkeiten wie sie in Hochgeschwindigkeitsrotationsdruckmaschinen gefordert werden, nicht erreicht werden.

Durch die Druckschrift der Firma FAIRCHILD "Analog VLSI-Technologie der 80er Jahre" sind CCD-Zeilensensoren in Verbindung mit einer Optik bekannt geworden.

Hierbei wird das vom abgetasteten Objekt auf winzige Fotoelemente fallende Licht proportional seiner Lichtintensität in Form von Ladungen ausgewertet. Mit Hilfe von internen Taktzyklen werden die gespeicherten Ladungen in parallele Analog-Schieberegister übertragen und von dort durch weitere Transportzyklen einem integrierten Ausgangsverstärker zugeführt, der sie als Video-Datenstrom ausgibt.

Ein Bildelementzähler liefert einen bitparallelen Datenstrom, um anzuzeigen, welche der lichtempflindlichen Zellen gerade eine Bildinformation ausgibt. Es ist ein Flankendetektor vorgesehen, um Schwarz-/Weiß oder Weiß-/Schwarz-Übergänge zu erkennen. Der Flankendetektor gibt dann ein entsprechendes Signal an einen Rufferspeicher ab, der die aktuelle Adresse des Zählers daraufhin speichert.

Der Erfindung liegt die Aufgabe zugrunde, einen Messkopf zur Bestimmung einer Lage einer Kante eines Körpers zu schaffen, der mit einer Messzeit von ca. 10 ms auskommt und mit dem eine Messgenauigkeit von mindestens $+^2/_{100}$ mm erreichbar ist.

Ausserdem kann die Messeinrichtung mit einer elektronischen Nullpunktverschiebung ausgerüstet werden, um somit mechanische Verstell- und Justiervorrichtungen einzusparen.

Ein Ausführungsbeispiel der Erfindung ist in der Zeichnung dargestellt und wird im folgenden näher beschrieben. Es zeigen:

Fig. 1 ein Blockschaltbild des erfindungsgemässen Messkopfes,

Fig. 2 ein Blockschaltbild einer erfindungsgemässen Anzeigeeinheit zur Darstellung der Messwerte des Messkopfes,

Fig. 3 Darstellung eines mittels des CCD-Sensors erzeugten Video-Signals bei teilweise abgedecktem Sensor,

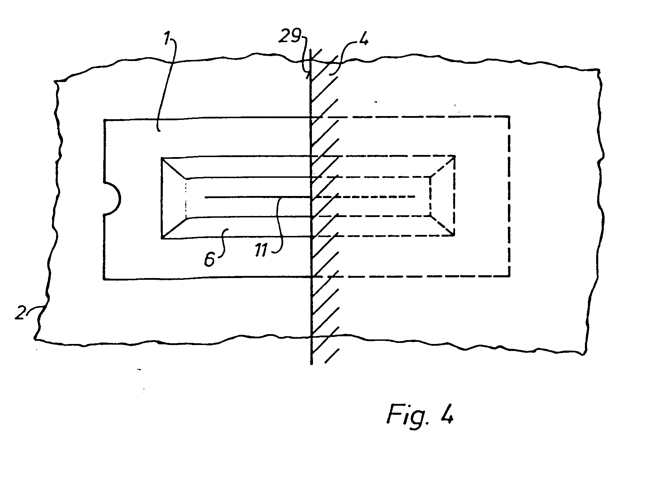

Fig. 4 Darstellung eines Messkopfes (ohne Lichtquelle) in Draufsicht und in vergrösserter Darstellung.

Fig. 5 Anordnung der erfindungsgemässen Messeinrichtung z.B. in einer Bogenrotationsdruckmaschine (in Seitenansicht).

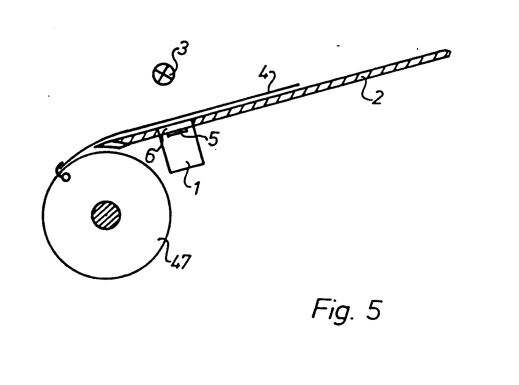

In Fig. 5 ist ein Messkopf 1 z.B. in einem Anlegetisch 2 einer Bogenrotationsdruckmaschine angebaut. Über ihm ist eine Infrarot-Lichtquelle 3 angeordnet, die ein IR-Licht mit z. B. 750 nm ausstrahlt und den Messkopf 1 beleuchtet. Der Messkopf 1 wird zum zu messenden Körper z. B. eines Papierbogens 4 hin mittels einer kratzfesten Glasplatte 6 abgedeckt. Darunter befindet sich ein Infrarot-Filter 5, der Fremdlichteinfluss in Tageslichtwellenbereichsspektrum verhindert. Als messendes Element ist erfindungsgemäss ein CCD-Zeilensensor (charged coupled device) 11 vorgesehen. CCD-Zeilensensoren bestehen z.B. aus 1728 in einer Zeile angeordneten Bildelementen. Diese Bildelemente sind z.B. 10 μm × 13 μm gross: ein Mittenabstand zwischen zwei Bildelementen beträgt 10 μm. Der CCD-Sensor 11 ist z.B. 17,28 mm lang und weist also 1728 Bildelemente auf, d.h. auf einen Millimeter kommen 100 Messzellen.

Der CCD-Zeilensensor 11 besteht in bekannter Weise aus vier zusammenwirkenden Funktionsgruppen.

1. Fotoempfindlicher Bereich

Dieser Bereich nimmt die in der Lichtverteilung vorhandene Information auf. Er besteht aus 1728 fotoemp-

EP 0 184 145 B2

findlichen Bildelementen, die mit Hilfe einer geeigneten Stopp-Diffusion gegeneinander isoliert sind. Die Bildelemente benötigen keine Steuerelektroden, die den Lichteinfall behindern würden. Die Photonen können die Bildelemente direkt erreichen. Jedes Bildelement ist mit einer umgreifenden Potentialschwelle vom anderen getrennt, so dass die Ladungen nicht ineinanderlaufen können. Der fotoempfindliche Bereich ist am Anfang und am Ende durch Isolationsbereiche, deren Länge jeweils 8 Bildelementen entspricht, sowie durch 8 daran anschliessende abgedeckte Bildelemente ergänzt. Diese liefern einen Schwarzwertstrom, der in dieser Anordnung jedoch nicht ausgewertet wird.

2. Integrationsgebiet

Jedem fotoempfindlichen Element ist ein Integrationselement (Speicher) zugeordnet. das die durch Photonen erzeugten Elektronen sammelt. Am Ende der Integrationszeit werden durch einen angelegten Impuls die Ladungen an ein Schieberegister übergeben.

3. Schieberegister

In zwei Schieberegistern werden die Ladungspakete zur Ausgangsschaltung transportiert. Jedes der beiden Schieberegister hat 879 Elemente. Am Ende der Schieberegister liegt je ein Ausgangsgate, das den Übergang der Ladungspakete zu den folgenden Ausgangsstufen ermöglicht.

4. Ausgangsstufen

Hinter den Ausgangsgates sind am Ende von zwei Schieberegistern zwei Impedanzwandler kombiniert mit Ladungsabführung vorgesehen. Die ankommenden Ladungspakete werden in diesen Endstufen in Spannungsimpulse am Ausgang des Zeilensensors umgewandelt, die proportional zu der Ladungsmenge der Ladungspakete sind.

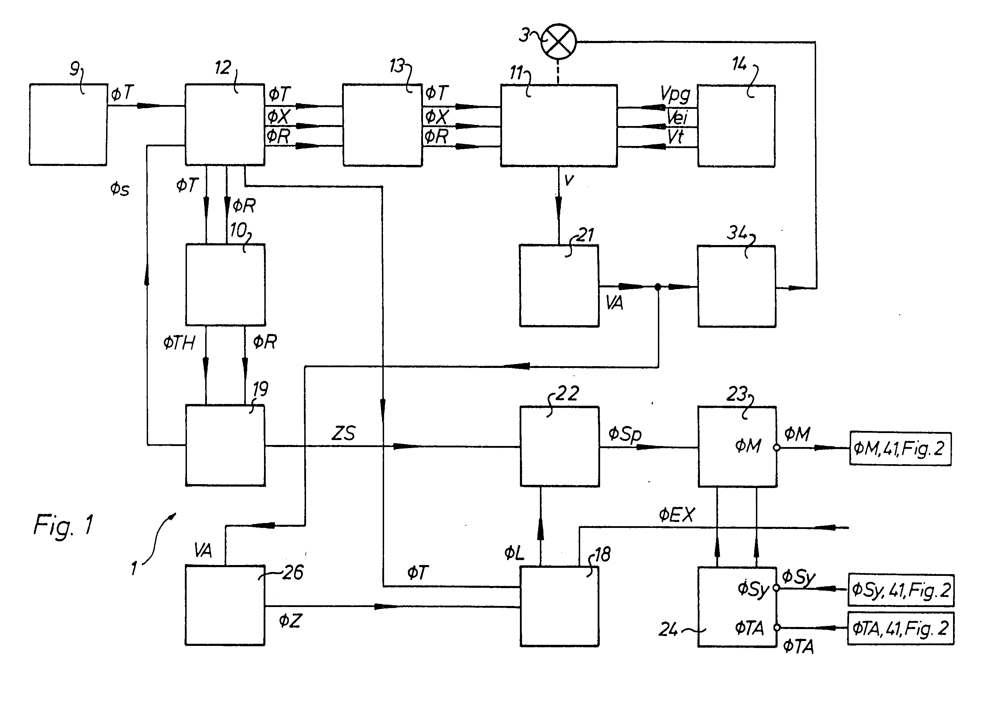

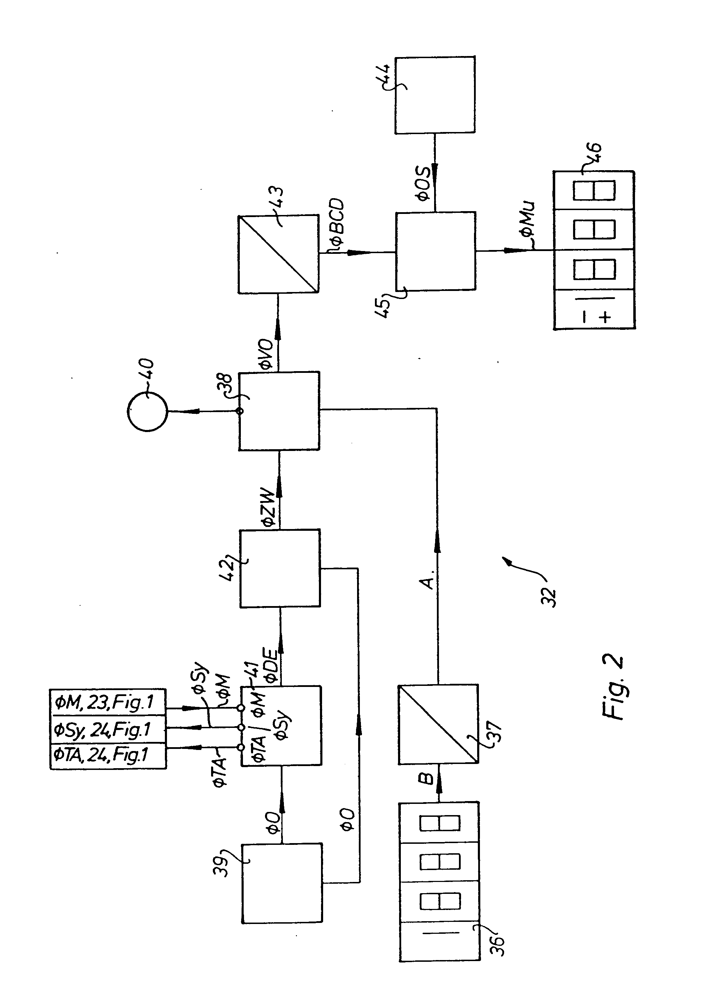

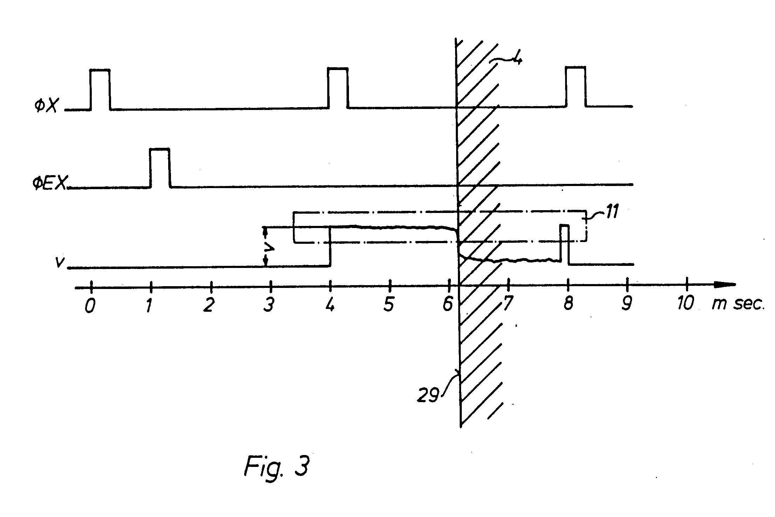

Die Aufgabe der in Blockschaltbildern (Fig. 1,2) dargestellten erfindungsgemässen Schaltung ist es:
- den Sensor mit den notwendigen Taktphasen und Spannungen zu versorgen,
- die Beleuchtungsquelle zu regeln, um eine Langzeitstabilität zu gewährleisten,
- das Videosignal aufzubereiten,
- den Dunkel-/Hellübergang zu erkennen,
- ein Mass für die Lage des Dunkel-/Hellüberganges zu erstellen,
- digital die Lage der Papierkante an ein Anzeigeorgan weiterzuleiten,
- über einen Vorwahlschalter und Subtrahierer den Nullpunkt variabel zu halten,
- mit Hilfe einer numerischen Anzeige den Messwert dezimal anzuzeigen,
- über externe elektronische oder mechanische Schalter die Synchronisation mit der Maschine zu gewährleisten.
- sämtliche Bauelemente mit einem Netzteil ausreichend zu versorgen.
- über eine Schnittstelle die Messwerte an einen externen Rechner oder Stellglieder weiterzuleiten.

Sollen nun z.B. einer Bogenrotationsdruckmaschine 20000 Bogen pro Stunde zugeführt werden, ergibt sich daraus, dass bei einer Zylinderumdrehung pro Bogen 180 ms zur Verfügung stehen, was einer Zeit von 0,5 ms/Winkelgrad entspricht. Soll z.B. eine Bogenverschiebeeinrichtung anstelle der bekannten Seitenziehmarke verwendet werden, so stehen bei einer Bogengeschwindigkeit von 20000 Bogen/Std. nur Messzeiten in der Grössenordnung von 10 ms zur Verfügung.

Während einer Messzeit von 10 ms werden im erfindungsgemässen Ausführungsbeispiel aus Sicherheitsgründen 2,5 Messreihen durchlaufen, d.h. innerhalb von 4 ms werden 1728 Auslese-, 32 Referenz- und 288 Leerschritte durchlaufen. Dieses bedeutet eine Frequenz von 512 kHz. eine Taktfrequenz $\emptyset$T eines Oszillators 9 beträgt 1,024 Mhz. Andere Festlegungen sind möglich.

Der komplexe Messvorgang der erfindungsgemässen Messeinrichtung wird anhand des Blockschaltbildes (Fig. 1) im Prinzip beschrieben. Ein CCD-Sensor 11 des Messkopfes 1 (gesamte Fig. 1) wird kontinuierlich mit einer Messrate von 250 Hz. (= 4 ms) betrieben. Der Oszillator 9, eine Taktaufbereitung 12, ein Treiberbaustein 13 und eine CCD-Versorgung 14 versorgen den CCD-Sensor 11 mit allen notwendigen Takten $\emptyset$T $\emptyset$X, $\emptyset$R und Spannungen Vpg, Vei, Vt. z.B. über eine Lichtschranke gelangt ein Maschinensynchronimpuls $\emptyset$EX zu einem Verknüpfungslogikbaustein 18. Über den Verknüpfungslogikbaustein 18 wird dann ein Zählerstand eines 11-bit-Zählers 19 im Moment eines Hell-/Dunkelüberganges (siehe Fig. 3) des CCD-Sensors 11 bei teilweise Abdekkung z.B. durch den Bogen 4, der mittels eines Videoverstärkers 21 und einem Präzisionskomparator 26 erzeugt wird, in einen Speicher 22 übernommen und mittels eines Multiplexers 23, der von einem Binärzähler 24 gesteuert wird, an ein Anzeigegerät 32 (Fig. 2) übertragen. Eine Übertragungsrate beträgt z.

3

B. 6500 bit/s.

Die für den CCD-Sensor 11 notwendigen Taktsignale ∅T, ∅X, ∅R werden, wie schon gesagt, in der Taktaufbereitung 12 fortlaufend erzeugt und an einen CCD-Treiber 13 übertragen und dort auf einen gewünschten Pegel, z.B. CMOS-Pegel umgesetzt. ∅T, ∅X, ∅R sind Taktsignale (Rechteckimpulse) unterschiedlicher Frequenz, sie sind zueinander phasenverschoben, wobei mit ∅T das Transporttaktsignal, mit ∅X das Transfertaktsignal und mit ∅R das Rückstelltaktsignal bezeichnet wird.

Das ∅X-Signal wird an das Transfer-gate des CCD-Sensors 11 gelegt, um die akkumulierte Ladung von den Bildsensorelementen zu dem Transport-Schieberegister zu bewegen.

Wird das Signal ∅T an das entsprechende Gate des CCD-Sensors 11 gelegt, so werden in ihm Transportverschieberegister zur Bewegung der Ladungspackungen von den einzelnen Bildsensorelementen zu dem Ladungsdetektor/Verstärker (= Ladung-Spannungsumsetzer) aktiviert.

Das Rückstellsignal ∅R wird benötigt, um die Zähler 10, 19 und CCD-Sensor 11 auf Null zu schalten.

Taktsignale ∅T und ∅R werden einem Vorlaufzähler 10 z.B. ein 4-bit-Zähler, zugeführt. Dieser schaltet nach einer bestimmten Anzahl von Vorlaufimpulsen die Taktimpulse ∅T als geschaltete Impulse ∅TH auf einen Hauptzähler 19 (= 11-bit-Zähler) durch. Jeweils nach 2048 Impulsen ∅TH gibt der Hauptzähler 19 einen Setzimpuls ∅S an die Taktaufbereitungsstufe 12 ab, in der er zum Rücksetzimpuls ∅R umgewandelt wird. Dieser Rücksetzimpuls ∅R setzt also zyklisch den Vorlaufzähler 10 und den Hauptzähler 19 auf Null, ebenso den CCD-Sensor 11. Der Hauptzähler 19 gibt seinen Zählerstand ZS laufend an einen Digital-Speicher 22 weiter. Von der Taktaufbereitungsstufe 12 werden ausserdem ∅T-Impulse an die Synchronisationsstufe 18 abgegeben. Die als Synchronisationsstufe ausgebildete Verknüpfungslogikstufe 18 hat dabei die Aufgabe, einen Speicher-Übernahmeimpuls ∅L aus den Impulsen ∅T, ∅Z und ∅EX zu erzeugen und an den Speicher 22 abzugeben.

Die in der Treiberstufe 13 stromverstärkten Impulse ∅T, ∅X und ∅R gelangen zum CCD-Sensor 11. Die Versorgungsspannungen Vpg, Vei und Vt werden von einer CCD-Versorgung 14 erzeugt und dem CCD-Sensor 11 zugeleitet.

Wie in Fig. 3 dargestellt wird jeweils zwischen zwei Transfersignalen ∅X die Lage einer Körperkante z.B. einer Bogenkante 29 auf dem CCD-Sensor 11 gemessen. Wie aus Fig. 3 zu ersehen, gibt bei Beleuchtung durch einen IR-Strahler 3 der CCD-Sensor 11 ein analoges Videosignal V ab. Die Länge und Amplitude dieses Videosignals V ist dabei ein Mass für die Lage einer zu messenden Körperkante z.B. Bogenkante 29. Das Videosignal V wird im Verstärker 21 (Fig.1) zum Signal VA verstärkt. Dieses wird dann dem Komparator 26 und einem Regelbaustein 34 zur Regelung der Beleuchtungsstärke des IR-Strahlers 3 zugeführt.

Der Komparator 26 ist mit mindestens einer oberen und unteren einstellbaren Schaltschwelle für das Videosignal VA ausgerüstet und liefert bei Überschreiten des eingestellten unteren Videosignalpegels beim Hell-/Dunkelübergang d.h. beim teilweisen Abdecken des CCD-Sensors 11 einen digitalen Impuls ∅Z, der dem Synchronisationsbaustein 18 zugeführt wird. Im Synchronisationsbaustein 18 werden die Impulse ∅Z, ∅T und ∅EX zu einem Übernahmeimpuls ∅L verarbeitet. Dieser Impuls ∅L aktiviert den Speicher 22, so dass er bei einer Flanke des Übernahmeimpulses ∅L den gerade in jenem Zeitpunkt am Hauptzähler 19 anstehenden Zählerstand in den Speicher 22 übernimmt. Vom Speicher 22 wird der Zählerstand mittels des Multiplexers 23, welcher über einen 4-bit-Binärzähler 24 gesteuert wird, an eine Anzeigeeinheit 32 abgegeben (gesamte Fig. 2).

Der CCD-Sensor 11 wird, wie schon gesagt, von einer Infrarot-Lichtquelle 3 bestrahlt. Sie ist oberhalb des Sensors 11 in einem geringen Abstand angeordnet. Da der Sensor 11 empfindlich auf Beleuchtungsstärkenänderungen und Temperaturschwankungen reagiert. ist ein Regelungsbaustein 34 zur Regelung der Beleuchtungsstärke der Lichtquelle 3 vorgesehen. Als Ist-Wert wird hierbei die Spannungshöhe des Videosignals V genommen, die mit einem einstellbaren, einer bestimmten Beleuchtungsstärke entsprechenden, Sollwert verglichen wird. Entsprechend der Regelabweichung wird die Beleuchtungsstärke mittels eines Regelbausteins 34 geregelt.

Das Anzeigegerät 32 (Fig.2) weist einen Vorwahlschalter 36 auf. Mittels des Vorwahlschalters 36 lässt sich der Nullpunkt des Messsystems mittels Subtraktion verschieben. Der Einstellwert des Vorwahlschalters 36 entsprechende BCD-Wert B wird einem BCD/Binär-Codewandler 37 zugeführt. Der vom BCD-Wert B in einen Binär-Wert A gewandelte Wert A wird invertiert einem Volladdierer 38 zugeführt.

Die für die Datenübertragung benötigte Taktfrequenz ∅O wird in einem Oszillator 39 erzeugt. Die entsprechenden Impulse ∅O werden einem Demultiplexer 41 und einem Zwischenspeicher 42 zugeführt. Der Demultiplexer 41 erzeugt einen Synchronimpuls ∅Sy, um eine Gleichphasigkeit von Multiplexer 23 (im Messkopf 1) und Demultiplexer 41 in der Anzeigeeinheit 32 zu erreichen. Die vom Multiplexer 23 (Messkopf 1) seriell am Demultiplexer 41 eintreffenden Daten ∅M werden im Demultiplexer 41 auf jeweils 16-bit getrennt und als ∅DE-Impulse an den Zwischenspeicher 42 abgegeben und dort zwischengespeichert. Neue Daten überschreiben dabei jeweils die alten.

Ausserdem werden im Demultiplexer 41 die Taktsignale ∅TA erzeugt und dem 4-bit-Zähler 24 des Messkopfes 1 zugeführt. Aus dem Zwischenspeicher 42 werden Impulse ∅ZW an den Volladdierer 38 abgegeben und mit dem invertierten Binär-Wert A des Vorwahlschalters 36 addiert.

Weiter weist der Volladdierer 38 einen Anschluss (Schnittstelle) für einen Rechner 40 auf. Die im Volladdierer 38 addierten ausgehenden Binär-Impulse ∅VO werden einem Binär-/BCD-Codewandler 43 zugeführt und von diesem als ∅BCD-Impuls an einen Multiplexer 45 abgegeben, der von einem Oszillator 44 getrieben wird. Vom Multiplexer 45 gelangen Impulse ∅MU zu einem digitalen Anzeigegerät 46. an dem der dem Messwert entsprechende Wert abgelesen werden kann.

Soll eine Messung über den Messkopf 1 zu einem bestimmten Zeitpunkt erfolgen, so muss ein externer Synchronisationsimpuls ∅EX dem Messkopf von aussen zugeführt werden. Als Impulsgeber eignet sich z.B. eine Gabel-IR-Lichtschranke, oder auch ein mechanischer Taster.

Über den Vorwahlschalter 36 kann ein beliebiger Nullpunkt eingestellt oder bei z.B. Bogenverschiebungsvorgängen in Bogenrotationsdruckmaschinen ein beliebiger Sollwert für die Lage eingegeben werden.

Aus Vereinfachungsgründen wurde nicht beschrieben, dass jedes Signal oder Wert V, VA bzw. jeder Impuls A, B, ∅BCD, ∅DE, ∅EX, ∅L, ∅M, ∅MU, ∅O, ∅OS, ∅R, ∅S, ∅Sy, ∅SP, ∅T, ∅TA, ∅TH, ∅VO, ∅ZW jeweils über eine gleichnamige Signalleitung transportiert wird.

Der Multiplexer 23 weist einen Ausgang ∅M auf, an den die Signalleitung ∅M angeschlossen ist, der Zähler 24 weist die Eingänge ∅Sy und ∅TA auf, an die die Signalleitungen ∅Sy und ∅TA angeschlossen sind, der Demultiplexer 41 weist die Ausgänge ∅Ta, ∅Sy und den Eingang ∅M auf, an welche die Signalleitungen ∅TA, ∅Sy und ∅M angeschlossen sind.

Mit 47 ist ein Bogenübernahmezylinder bezeichnet.

| Teileliste | |
| --- | --- |
| 1 Messkopf | 26 Komparator |
| 2 Anlegetisch | 27 |
| 3 Infrarotlichtquelle | 28 |
| 4 Bogen | 29 Bogenkante |
| 5 Infrarotfilter | 30 |
| 6 Glasplatte | 31 |
| 7 Bogenkante | 32 Anzeigeeinheit |
| 8 | 33 Infrarot-Lichtquelle |
| 9 Oszillator | 34 Regelbaustein |
| 10 Vorlaufzähler | 35 |
| 11 CCD-Sensorelement | 36 Vorwahlschalter |
| 12 Taktaufbereitungs-stufe | 37 BCD-/Binär-Code-wandler |
| 13 Treiberstufe | 38 Impuls-Volladdierer |
| 14 Spannungsversor-gungsstufe | 39 Oszillator |
| 15 | 40 Rechner |
| 16 | 41 Demultiplexer |
| 17 | 42 Zwischenspeicher |
| 18 Verknüpfungslogik-stufe | 43 Binär-/BCD-Code-wandler |
| 19 Hauptzähler | 44 Oszillator |
| 20 | 45 Multiplexer |
| 21 Videoverstärkerstufe | 46 Anzeigegerät |
| 22 Speicherstufe | 47 Bogenübernahme-zylinder |
| 23 Multiplexer | 48 |
| 24 Zähler | 49 |
| 25 | 50 |

**Patentansprüche**

1. Einrichtung zum Erfassen einer Lage einer Kante eines Bogens, insbesondere der Kante, die senkrecht zur Laufrichtung des Bogens weist, in einer Rotationsdruckmaschine mit einer lichtelektrischen Messeinrichtung, bei der im geringen Abstand hintereinander lichtelektrische Empfänger angeordnet sind und bei der zur Erzeugung und Auswertung von Steuerimpulsen eine Taktaufbereitungsstufe (12), ein Verstärkerelement (21), ein Komparator (26) und ein Verknüpfungselement (18) vorgesehen sind, beider der lichtelektrische Empfänger ein CCD-Sensorelement (11) ist, ein erster Oszillator (9) über eine Datenleitung (∅T) mit der Taktaufbereitungsstufe (12) in Wirkverbindung steht, die Taktaufbereitungsstufe (12) über Signalleitungen (∅T, ∅X, ∅R) mit einer Treiberstufe (13), über Datenleitungen (∅T, ∅R) mit einem Vorlaufzähler (10) und über eine Signalleitung (∅T) mit der Verknüpfungslogikstufe (18) in Wirkverbindung steht, der Vorlaufzähler (10) über Signalleitungen (∅TH, ∅R) mit einem Hauptzähler (19) und der Taktaufbereitungsstufe (12) über eine Signalleitung (∅S) in Wirkverbindung stehen, der Hauptzähler (19) und eine Speicherstufe (22) über eine Signalleitung (ZS) und die Speicherstufe (22) über eine Signalleitung (∅SP) mit einer Multiplexerstufe (23) in Wirkverbindung stehen bzw. steht, die Treiberstufe (13) über Signalleitungen (∅T, ∅X, ∅R) mit einem CCD-Sensor (11) und dieser über Signalleitungen (Vpg, Vei, Vt) mit einer Spannungsversorgungsstufe (14) und über eine Signalleitung (V) mit dem als Videoverstärkerstufe ausgebildeten Verstärker (21) in Wirkverbindung steht, der Komparator (26) mindestens mit einer oberen und unteren einstellbaren Schaltschwelle für ein von der Videoverstärkerstufe (21) übernommenen Videosignal (VA) ausgerüstet ist und beim Überschreiten der unteren eingestellten Schaltschwelle beim Hell-/Dunkelübergang des CCD-Sensors (11) einen Impuls (∅Z) erzeugt, dass die Videoverstärkerstufe (21) über Signalleitungen (VA) mit einem Regelbaustein (34) und dem Komparator (26) und dieser über eine Signalleitung (∅Z) mit der Verknüpfungslogikstufe (18) in Wirkverbindung steht, eine Infrarotlichtquelle (3) vorgesehen ist, ein geschlossener Regelkreis (34) zur Einhaltung einer gleichmässigen Strahlungsintensität des Infrarotstrahlers (3) durch Bewertung der Spannungshöhe des Videosignals (V) des CCD-Elementes (11) vorgesehen ist, die Verknüpfungslogikstufe (18) über eine Signalleitung (∅L) mit der Speicherstufe (22) in Wirkverbindung steht, ein dritter Zähler (24) vorgesehen ist, der über Signalleitungen (∅Sy, ∅TA) mit dem Multiplexer (23) in Wirkverbindung steht, die Verknüpfungslogikstufe (18) einen Eingang (∅EX) für einen externen Schaltimpuls (∅EX) aufweist, der Multiplexer (23) einen Impulsausgang (∅M) aufweist, und der dritte Zähler (24) je einen Eingang (∅Sy und ∅TA) zur Aufnahme von Synchronisations- (∅Sy) und Taktimpulsen (∅TA) aufweist.

2. Einrichtung nach Anspruch 1, dadurch gekennzeichnet, dass zur Anzeige der Messwerte (∅M) des elektrischen Messkopfes (1) eine Anzeigeeinheit (32) vorgesehen ist.

3. Einrichtung nach Anspruch 2, dadurch gekennzeichnet, dass die mit ihr zusammenwirkende Anzeigeeinheit (32) einen Demultiplexer (41) aufweist, der über eine Signalleitung (∅DE) mit einer Zwischenspeicherstufe (42) und mit einem Oszillator (39) über eine weitere Signalleitung (∅O) verbunden ist, dass der Oszillator (39) über eine Signalleitung (∅O) mit der Zwischenspeicherstufe (42) in Wirkverbindung steht, dass ein Volladdierer (38) vorgesehen ist, dass dieser Volladdierer (38) über Signalleitungen (∅ZW; ∅VO; A) mit der Zwischenspeicherstufe (42), einem Binär-/BCD-Codewandler (43) und einem BCD-/Binär-Codewandler (37) in Wirkverbindung steht, dass der Binär-/BCD-Codewandler (43) über eine Signalleitung (∅BCD) mit einem Multiplexer (45) in Wirkverbindung steht, dass der Multiplexer (45) über Signalleitungen (∅OS, ∅MU) mit einem Oszillator (44) und einem Anzeigegerät (46) in Wirkverbindung steht, dass ein einstellbarer Vorwahlschalter (36) vorgesehen ist, der über eine Signalleitung (B) mit dem BCD-/ Binär-Codewandler (37) in Wirkverbindung steht, dass der Demultiplexer (41) mit zwei Ausgängen ∅TA, ∅Sy) und einem Eingang (∅M) ausgestattet ist, an die Signalleitungen (∅TA, ∅Sy, ∅M) als Verbindung zum Messkopf (1) angeschlossen werden können.

4. Einrichtung nach obigen Ansprüchen, dadurch gekennzeichnet, dass als Infrarotlichtquelle ein Infrarotstrahler (3) in Verbindung mit einem Infrarotfilter (5) gleicher Wellenlänge verwendet wird.

## Claims

1.   Apparatus for detecting a position of an edge of a sheet, in particular the edge which points perpendicularly to the direction of travel of the sheet, in a rotary printing machine having a photoelectric measuring apparatus, in which photoelectric detectors are arranged proximate to one another in series, and in which a timing pulse generator stage (12), an amplifier element (21), a comparator (26) and a logic element (18) are provided for generating and evaluating control pulses, in which the photoelectric detector is a CCD sensor element (11), a first oscillator (9) is in operative connection via a data line (∅T) with the timing pulse generator stage (12), the timing pulse generator stage (12) is in operative connection via signal lines

(⌀T, ⌀X, ⌀R) with a driver stage (13), via data lines (⌀T, ⌀R) with a forward-motion counter (10) and via a signal line (⌀T) with the logic stage (18), the forward-motion counter (10) is in operative connection with a main counter (19) via signal lines (⌀TH, ⌀R) and with the timing pulse generator stage (12) via a signal line (⌀S), the main counter (19) and a memory stage (22) are in operative connection via a signal line (ZS) and the memory stage (22) is in operative connection via a signal line (⌀SP) with a multiplexer stage (23), the driver stage (13) is in operative connection via signal lines (⌀T, ⌀X, ⌀R) with a CCD sensor (11) and the latter is in operative connection via signal lines (Vpg, Vei, Vt) with a power supply stage (14) and via a signal line (V) with the amplifier (21) in the form of a video amplifier stage, the comparator (26) is equipped at least with one upper and lower adjustable switching threshold for a video signal (VA) transferred from the video amplifier stage (21) and generates a pulse (⌀Z) when the lower switching threshold set is exceeded at the light/dark transition of the CCD sensor (11), the video amplifier stage (21) is in operative connection via signal lines (VA) with a control chip (34) and the comparator (26), and the latter is in operative connection via a signal line (⌀Z) with the logic stage (18), an infrared light source (3) is provided, a closed-loop control circuit (34) for maintaining a uniform emission intensity from the infrared emitter (3) by evaluation of the voltage level of the video signal (V) of the CCD element (11) is provided, the logic stage (18) is in operative connection via a signal line (⌀L) with the memory stage (22), a third counter (24) is provided which is in operative connection via signal lines (⌀Sy, ⌀TA) with the multiplexer (23), the logic stage (18) has an input (⌀EX) for an external switching pulse (⌀EX), the multiplexer (23) has a pulse output (⌀M), and the third counter (24) has in each case one input (⌀Sy and ⌀TA) for receiving synchronization pulses (⌀Sy) and one for receiving timing pulses (⌀TA).

2. Apparatus according to Claim 1, characterized in that a display unit (32) is provided for displaying the measured values (⌀M) of the electrical measuring head (1).

3. Apparatus according to Claim 2, characterized in that the display unit (32) cooperating therewith has a demultiplexer (41) which is connected to an intermediate memory stage (42) via one signal line (⌀DE) and to an oscillator (39) via a further signal line (⌀O), in that the oscillator (39) is in operative connection via a signal line (⌀O) with the intermediate memory stage (42), in that a full adder (38) is provided, in that said full adder (38) is in operative connection via signal lines (⌀ZW; ⌀VO; A) with the intermediate memory stage (42), a binary/BCD code converter (43) and a BCD/binary code converter (37), in that the binary/BCD code converter (43) is in operative connection via a signal line (⌀BCD) with a multiplexer (45), in that the multiplexer (45) is in operative connection via signal lines ((⌀OS, ⌀MU) with an oscillator (44) and a display device (46), in that an adjustable preselection switch (36) is provided which is in operative connection via a signal line (B) with the BCD/binary code converter (37), in that the demultiplexer (41) is equipped with two outputs (⌀TA, ⌀Sy) and one input (⌀M) to which signal lines (⌀TA, ⌀Sy, ⌀M) can be connected as a connection to the measuring head (1).

4. Apparatus according to the preceding claims, characterized in that an infrared emitter (3) in conjunction with an infrared filter (5) of the same wavelength is used as the infrared light source.

**Revendications**

1. Dispositif de mesure d'une position d'une arête d'une feuille, en particulier de l'arête tournée perpendiculairement par rapport aux directions de défilement de la feuille, dans une machine à imprimer rotative équipée d'un dispositif de mesure photoélectrique, dans lequel, à faible distance les uns derrière les autres, sont disposés des récepteurs photoélectriques et dans lequel, pour produire et exploiter des impulsions de commande, sont prévus un étage de traitement cadencé (12), un élément amplificateur (21), un comparateur (26) et un élément de combinaison (18), le récepteur photoélectrique étant un élément capteur de type CCD (11) un premier oscillateur (9) étant relié fonctionnellement à l'étage de traitement cadencé (12), par l'intermédiaire d'une ligne de données (⌀T), l'étage de traitement cadencé (12) étant relié fonctionnellement, par des lignes de signalisation (⌀T, ⌀X, ⌀R), à un étage d'attaque (13), et, par des lignes de données (⌀T, ⌀R), à un compteur de divisions (10) et, par une ligne de signalisation (⌀T), à l'étage logique combinatoire (18), le compteur de divisions (10) étant relié fonctionnellement, par des lignes de signalisation (⌀TH, ⌀R), à un compteur principal (19) et, à l'étage de traitement cadencé (12), par une ligne de signalisation (⌀S), le compteur principal (19) étant relié fonctionnellement à un étage mémoire (22) par une ligne de signalisation (ZS), et l'étage mémoire (22) est relié fonctionnellement à un étage multiplexeur (23) par une ligne de signalisation (⌀SP), l'étage d'attaque (13) étant relié fonctionnellement, par des lignes de signalisation (∅T, ∅X, ∅R), à un compteur CCD (11) et celui-ci, par des lignes de signalisation (Vpg, Vei, Vt), à un étage d'alimentation en tension (14) et par une ligne de signalisation V à un amplificateur (21), réalisé sous forme d'étage amplificateur vidéo, le comparateur (26) est doté de valeurs de commutation supérieure et inférieure réglables pour un signal vidéo (Va) transmis par le ou les étages vidéo (21) et produit, en cas de dépassement de la valeur de commutation inférieure réglée, lors de la transition clair-sombre du capteur CCD (11), une impulsion (∅Z), de manière que l'étage amplificateur vidéo (21) soit relié par, des lignes de signalisation (Va), à un composant de régulation (34) et au comparateur (26) et que celui-ci soit relié par ligne de signalisation (∅Z), relié fonctionnellement à l'étage logique de combinaison (18), une source de lumière infrarouge (3) étant prévue, un circuit de régulation (34) fermé étant prévu pour maintenir une intensité de rayonnement régulière de l'émetteur infrarouge (3), par évaluation de la valeur de tension du signal vidéo (V) de l'élément capteur (11), l'étage logique de combinaison (18) étant relié fonctionnellement, par une ligne de signalisation ((∅L), à l'étage mémoire (22), un troisième compteur (24) étant prévu, qui est relié fonctionnellement, par des lignes de signalisation (∅Sy, ∅DA), au multiplexeur (23), l'étage logique de combinaison (18) présentant une entrée (∅EX) pour une impulsion de commutation externe (∅EX), le multiplexeur (23) présentant une sortie d'impulsion (∅M) et le troisième compteur (24) présentant des entrées (∅Sy et ∅TA) pour capter les impulsions de synchronisation (∅Sy) et de cadencement (∅Ta).

2.  Dispositif selon la revendication 1, caractérisé en ce qu'une unité d'affichage (32) est prévue pour afficher les valeurs de mesure (∅M) de la tête de mesure électrique (1).

3.  Dispositif selon la revendication 2, caractérisé en ce que l'unité d'affichage (32) coopérant avec lui présente un démultiplexeur (41) relié par une ligne de signalisation (∅DE) à un étage mémoire intermédiaire (42) et relié à un oscillateur (39), par une ligne de signalisation (∅O) suplémentaire, en ce que l'oscillateur (39) est relié fonctionnellement, par une ligne de signalisation (∅O), à l'étage mémoire intermédiaire (42), en ce qu'un additionneur complet (38) est prévu, en ce que cette additionneur complet (38) est relié fonctionnellement, par des lignes de signalisation (∅Zy; ∅Vo; A), à l'étage mémoire intermédiaire (42) un convertisseur de code binaire/BCD et à un convertisseur de code BCD/binaire, en ce que le convertisseur de code binaire/BCD (43) est relié fonctionnellement, par une ligne de signalisation (∅BCD), à un multiplexeur 45, en ce que le multiplexeur (45) est relié fonctionnellement par des lignes de signalisation par des lignes de signalisation (∅OS, ∅MU) à un oscillateur (44) et à un appareil d'affichage (46), en ce qu'un interrupteur de présélection (36) réglable est prévu, qui est relié fonctionnellement, par une ligne de signalisation (B), au convertisseur de code (BCD)/binaire, en ce que le démultiplexeur (41) est pourvu de deux sorties (∅TA, ∅Sy) et est équipé d'une entrée (∅M), auxquelles des lignes de signalisation (∅TA, ∅Sy, ∅M) peuvent être raccordées, à titre de liaison, à la tête de mesure (1).

4.  Dispositif selon les revendications précédentes, caractérisé en ce qu'un émetteur infrarouge (3) est utilisé, en liaison avec un filtre à infrarouges (5) de même longueur d'onde, à titre de source à infrarouges.

Fig. 1

Fig. 2

Fig. 3

EP 0 184 145 B2

*Fig. 4*

*Fig. 5*